# EUROPEAN PATENT SPECIFICATION

(11) **EP 1 860 825 B1**
(45) Date of publication and mention of the grant of the patent: **27.02.2013**
(21) Application number: 04797375.5
(22) Date of filing: 23.11.2004
(51) Int. Cl.: H04L 12/28, H04L 12/70

(54) **A METHOD AND SYSTEM FOR DELAMINATLY ENSURING THE NETWORK SERVICE QUALITY**
VERFAHREN UND SYSTEM ZUM DELAMINIERTEN SICHERSTELLEN DER NETZWERKDIENSTGÜTE
PROCEDE ET SYSTEME PERMETTANT DE GARANTIR INDIVIDUELLEMENT LA QUALITE DE SERVICE DANS UN RESEAU

(43) Date of publication of application: 28.11.2007
(73) Proprietor: ZTE Corporation, 518057 Shenzhen, Guangdong (CN)
(72) Inventor: CHEN, Dan, ZTE Plaza, Keji Road South, Shenzhen, Guangdong 518057 (CN); CHI, Yudong, ZTE Plaza, Keji Road South, Shenzhen, Guangdong 518057 (CN); SU, Yong, ZTE Plaza, Keji Road South, Shenzhen, Guangdong 518057 (CN); LUO, Zhongsheng, ZTE Plaza, Keji Road South, Shenzhen, Guangdong 518057 (CN)
(74) Representative: Gray, John James
(86) International application number: PCT/CN2004/001344
(87) International publication number: WO 2006/056099

(56) References cited:
- WO-A-00/30295
- WO-A-01/80485
- JP-A- 2001 094 605
- KR-A- 20010 001 984
- US-A- 2002 199 012
- US-A1- 2003 137 944
- J-F HUARD ET AL: "Meeting QOS Guarantees by End-to-End QOS Monitoring and Adaptation" INTERNET CITATION, [Online] XP002153896 Retrieved from the Internet: URL:http://comet.columnbia.edu/publication s> [retrieved on 1996-08-31]
- LIMA S ET AL: "A distributed admission control model for class-based networks using edge-to-edge qos and sls monitoring" COMMUNICATION SYSTTEMS, 2002. ICCS 2002. THE 8TH INTERNATIONAL CONFERE NCE ON NOV. 25-28, 2002, PISCATAWAY, NJ, USA,IEEE, vol. 1, 25 November 2002 (2002-11-25), pages 122-127, XP010629194 ISBN: 978-0-7803-7510-9
- BOUCHAT C ET AL: "QoS in DSL access" IEEE COMMUNICATIONS MAGAZINE, IEEE SERVICE CENTER, PISCATAWAY, US, vol. 41, no. 9, 1 September 2003 (2003-09-01), pages 108-114, XP011100895 ISSN: 0163-6804

## Description

### Technical Field

This invention presents a method and a system thereof for ensuring quality of service in a layered way, applicable to metropolitan area network (MAN).

### Background Art

Major abbreviations:
DRC: Distributed Resource Controller
QPPC: QoS Pipes Provisioning Controller
QSC: QoS Service Controller
ER: Edge Router
SIP: Session Initiation Protocol
COPS: Common Open Policy Service
SNMP: Simple Network Management Protocol
LER: Label Edge Router
LSP: Label Switch Path
LSR: Label Switch Router
QoS refers to network performance relating to application demands and techniques for ensuring network performance. Currently, several mechanisms for ensuring QoS have been developed:

### IntServ/RSVP( integrated service/resource reservation protocol) Model

RSVP is used to set up resource reservation in an integrated service network. A subscriber makes a QoS request to the network for an application stream by using the RSVP, and a router that receives this QoS request decides the path of this application stream, transmits the QoS request to other routers in the path by using RSVP, establishes and stores the information of the service, and reserves certain resources in the router for the application stream. The resource reservation is carried out according to the path from the source end of the application stream to its receiving end, and certain resources are reserved for each application stream along the path. Although this type of service model can ensure absolute QoS, it has a high requirement on the router that it should support RSVP and permission control protocol, and furthermore, a large amount of resources are needed to maintain and update the database, which is complicated to achieve, thus resulting in a poor expansibility of the network using this model.

### DiffServ (differentiating service) Model

The main idea of a DiffServ model is to label a differentiating service code point (DSCP) for a packet at the entrance of the network. It is used to carry the service information when the packet is processed at the in-between nodes of the transmission path of the network. By setting different labels for the DSCP field of a packet, and based on the processing for the DSCP field, some different levels of service may be formed. In this way, at the entrance of ISP, an edge router classifies, counts and labels data packets according to the agreement of service level signed with subscribers. The main task of a core network is just to take corresponding measures to transmit packets according to the DSCP labels on the packet's head and to schedule and distribute the path of the packets. This type of DiffServ model is easy to implement, and what is needed to do is just the mapping from the service requests of the subscriber to the DSCP at the edge of the network without using explicit resource reservation signaling at the core node of the network, and thus the complexity of realization is reduced. However, since there is not an access control and signaling mechanism, not all the streams can be ensured to have enough resources.

### MPLS(multiple protocol label switch) Technique

MPLS is a kind of switch technique combining the second layer and the third layer, and MPLS itself can not solve but can assist in solving the QoS problems. MPLS incorporates a mechanism based on the label, separating the choosing of routing and data transmission, and prescribes the path for a packet passing through a network through labels. MPLS network consists of a label switch router (LSR) at the core part and a label edge router (LER) at the edge part. The function of the LSR can be regarded as the combination of an ATM exchange and a traditional router, consisting of control units and switch units; the function of the LER is to analyze IP heads to determine the corresponding transmission levels and label switch paths (LSP). MPLS supports DiffServ model and can map a plurality of BAs (Behavior Aggregation) to one LSP of MPLS and transmit the traffic on the LSP according to PHB (Per-Hop-Behavior) of BAs. However, the combination of MPLS and Diffserv is just a processing manner on a data plane and it can not ensure the QoS of data streams entering network.

WO 00/30295 A discloses a method and apparatus for making admission decisions in a packet switched network. WO 01/80485 A discloses a method in packet based communication network including network domains to establish a virtual leased line between a source and a destination in different domains in order to achieve packet transfer between the source and the destination. "Meeting QOS Guarantees by End-to-End QOS Monitoring and Adaptation" by J-F HUARD et al retrieved on 31 August 1996, discloses the design and implementation of the transport layer of a native ATM protocol stack and its embedding into an overall architecture that provides end-to-end quality of service (QOS). "A DISTRIBUTED ADMISSION CONTROL MODEL FOR CLASS-BASED NETWORKS USING EDGE-TO-EDGE QOS AND SLS MONITORING" by SOLANGE LIMA et al (COMMUNICATION SYSTEMS, 2002. ICCS 2002. THE 8TH INTERNATIONAL CONFERENCE ON NOV. 25-28, 2002, PISCATAWAY, NJ, USA, IEEE, vol. 1, 25 November 2002, pages 122-127, XP010629194 ISBN: 978-0-7803-7510-9), disclose an encompassing admission control (AC) model for multi-service class-based networks. And "QOS in DSL access" by BOUCHAT C et al (IEEE COMMUNICATIONS MAGAZINE, IEEE SERVICE CENTER, PISCATAWAY, US, vol. 41, no. 9, 1 September 2003, pages 108-114, XP11100895 ISSN: 0163-6804), disclose an architecture for DSL access facilitating IP service guarantees leveraging the available QOS mechanisms in the transport-technology-specific data plane while extending the control plane.

### Summary of the Invention

The invention provides for a system for ensuring network QoS, the network comprising a QoSrelated service layer, a resource control layer and a bearer layer, the resource control layer comprising a coarse-grained resource control layer and a fine-grained resource control layer, the system comprising:
a QoS service controller (QSC) for extracting a QoS request of a service to a network from service requests, transmitting the QoS request to a distributed resource controller (DRC) in the network, and transmitting a resource-releasing information;
a QoS pipes provisioning controller (QPPC) for provisioning QoS pipes, obtaining information about resource occupation of the QoS pipes periodically, and adjusting the QoS pipes capacity dynamically but not by real-time; and
the distributed resource controller (DRC), for processing the QoS request from the QSC dynamically, and conducting access control and resource distribution for each resource request.

According to another aspect of the invention, a method for distributing network resources, comprising performing following steps within the system above, in a layered way:
provisioning coarse-grained QoS pipes beforehand through a QoS pipes provisioning controller (QPPC);
distributing the resources in QoS pipes to the corresponding streams fine-grainedly according to the resource request of each stream from the service controller (QSC) through the Distributed Resource controller (DRC); and
dynamically adjusting the resource of the QoS pipes by the QPPC according to the occupation condition of the pipes fed back by the DRC.

According to another aspect of the invention, a method for transmitting QoS data in the network, comprising performing following steps within the system above:
according to a QoS resource request from a service source end, the QoS service controller (QSC) performing signaling interaction with the service receiving end of the request;
according to the confirmation information from said service receiving end, the QSC transmitting the QoS resource request to the distributed resource controller (DRC) of the source;
the distributed resource controller (DRC) of the source communicating with the distributed resource controller (DRC) of the destination to decide whether the subscriber's request can be accessed;
the QSC transmitting a positive reply to the service source according to the information of deciding to access the subscriber's request;
the service source transmitting the data to the distributed resource controller (DRC) of the source according to the reply; and
the distributed resource controller (DRC) of the source mapping said transmitted data to different QoS pipes for transmission.

Other optional embodiments and variations on the above aspects are as claimed in the appended dependent claims.

The invention at least has the following advantages:

### Expansibility

Centralized device needs to process all the resource requests of streams passing through the network, retain information of the whole network resource state and all the streams passing through the network, and provision ER frequently, resulting in a poor expansibility. The distributed resource control performs the function of the centralized device at the edge, thus making the edge devices be able to perform access control and resource distribution.

### Reliability

The centralized processing of requests of the whole network resource is avoided, and a good reliability can be achieved by using the distributed method. When the centralized device breaks down, the QoS resource control of the whole network will be affected, while the loss will be reduced to the minimum if a distributed method is used.

### Multicast Support

If the signaling protocol adopts a QoS signaling similar to the RSVP, then backward resource reservation can be performed, and therefore a multicast support can be provided at a certain degree.

### Description of the Drawings

Figure 1 is a delaminated function and structure diagram according to the QoS control configuration of the invention;
Figure 2 is a schematic view according to a hybrid QoS ensuring configuration of the invention.
Figure 3 is a schematic view of a specific embodiment of applying this invention in VoIP.

### Preferred Embodiment of the Invention

### Structure of QoS Configuration

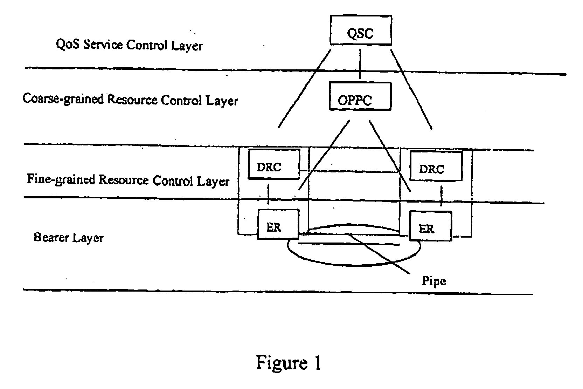

The network is divided into three layers: a QoS related service layer, a resource control layer and a bearer layer, wherein the resource control layer is further divided into two sub-layers: a coarse-grained resource control layer and a fine-grained resource control layer. The QoS logical configuration structure is shown as figure 1.

QoS pipe refers to a virtual connection of two edges of the network with certain QoS parameter characters. It is characterized in that: the connection is end-to-end; the QoS pipe resource is adjustable; the setup of QoS pipes is coarse-grained resource distribution, for example, every QoS pipe is used to transmit a certain kind of service or a certain type of QoS. QoS pipe is edge-to-edge in one network. For a large network, it can be divided into several fields, and in each field, the QoS pipe is edge-to-edge. The setup of pipe is based on the forecast of the network service amount and the plan of capacity, and the most resources are available on the busiest path. The setup of the pipe is charged by the QPPC (QoS pipes provisioning controller).

QPPC is a sub-layer of coarse-grained resource control in the resource layer, which is mainly for provisioning and maintaining QoS pipes, and may exist in network management devices. In a network supporting MPLS, the QPPC can utilize CR-LDP/RSVP-TE to set up QoS pipes. The setup ofQoS pipes is a kind of coarse-grained resource distribution.

QPPC mainly performs the following operations:
1) provisioning the QoS pipes: it can be either that the QPPC provisions the edge router, then the edge router initiates a dynamic setting of QoS pipes, or the QPPC directly provisions the router in the network statically;
2) adjusting the QoS pipe resource: the adjustment is not by real-time, rather the resource state of each pipe is adjusted appropriately according to the traffic distribution in each pipe;
3) cooperating with QoS monitor and investigating resource occupation; and
4) interacting the QoS pipe information with the QPPC of a neighboring field through negotiation: the interaction is not frequent.

DRC is the distributed logic entity of the fine-grained resource control sub-layer. It usually exists in the edge router;

It mainly performs the following operations:
- obtaining the resource table of all the QoS pipes passing through this router on the edge router: the resource information of the QoS pipes is basis for performing the access control by DRC;
- performing the access control and resource distribution based on the resource request of each stream: the resource distribution refers to designating a QoS pipe for each stream to pass through, and adjusting records of the available resource in the resource table accordingly based on the resource distribution; and
- processing the QoS signaling (i.e. the protocol used to perform resource request, resource release, and resource modification toward the network) and transmitting the same to other related processors;

QSC is the logic entity of the service control layer, mainly for processing service request. It may exist in a soft-handover device, an application server, or other service control devices in service layer;

It mainly performs the following operations:
1) processing the service request, such as accepting SIP protocols, including extracting the QoS request of this service from the service request;
2) performing the identification, perfection, and record of QoS subscribers;
3) initiating the resource request, resource-releasing information, and processing feedback information to the DRC for the service requested by the subscriber;

The transmission network supports Diffserv, and has data plane functions of classification, supervision, queuing, and scheduling and the like.

ER refers to edge router, except for transmitting data in the above DiffServ mechanism, it is mainly used for receiving the provision information from the QPPC and initializing the establishment of QoS pipes by adopting RSVP-TE or other protocols. In short, it is used to obtain the Qos pipe information between the edge routers in the network. The DRC uses the QoS pipes information obtained from the ER as the basis for controlling fine-grained resource.

### Process and Interface

### 1) Coarse-grained Resource Distribution

In order to develop the QoS service, firstly the operators need to provision and establish QoS pipes, which needs to be completed by the QPPC. The establishment ofQoS pipes can be either that the QPPC provisions the edge routers, and the edge routers start RSVP-TE to set up the tunnel with certain resource reserved between the edge routers, or the QPPC provisions statically all the routers of the pipes directly. The amount of the resource reserved between edge routers depends on the preliminary capacity programming of the network. After the QPPC completes the task, the ER will form a resource information table according to the pre-provisioned QoS pipe information, in which the capacity and the exit of the QoS pipes are recorded. DRC performs the fine-grained resource distribution according to this table, and records the total capacity, the used resource condition, and the available resource condition of this pipe. The QPPC will check the using condition of the QoS pipe resource on the DRC periodically. For the situation of lacking resource (for example, the occupation rate of the QoS pipe resource is always above a threshold), the QPPC will increase the resource; for the pipes whose resource using rate is low (for example, the occupation rate of the QoS pipe resource is always below a threshold), the QPPC will decrease the resource properly, with these two thresholds being defined by the operators themselves. It can also be that the DRC reports to the QPPC on its own according to the occupation condition of the QoS pipe resource during a period, and thereby adjusts the pipes. The time interval of this kind of adjustment can be of every day, or every half month, or every half year. The interfaces between the QPPC and the router and between the QPPCs can adopt COPS protocol or SN1V1P protocol.

### 2) Fine-grained Access Control and Resource Distribution

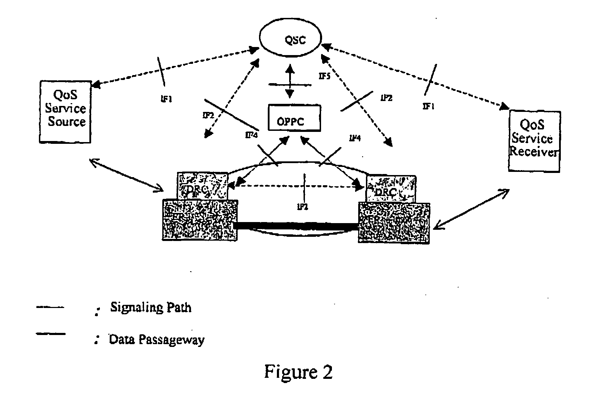

The fine-grained resource control mainly refers to the access control and resource distribution carried out for the stream that is to enter a certain QoS pipe. The process is dynamic and by real-time. The service request processing flow is shown as figure 2:
1) The QoS service source end generates a QoS service request, which includes subscriber's ID information, and information about starting point and terminal point etc.. The service can be initialized by subscribers, gateway, or QoS agent in Access Network.
2) When the QSC receives the request, it authenticates the subscriber to decide whether the subscriber is a legal QoS subscriber, if yes, it will further perform signaling interaction with service receiving end, otherwise, refuse the request of the service source.
3) After receiving the signaling acknowledge information from the service receiving end, the QSC parses the address and transmits the QoS resource request information to the DRC.
4) When the entrance DRC receives the resource request from the QSC, it will decide the exit DRC and corresponding QoS pipe according to the information of the resource request, and check whether there is enough resource in the QoS pipes, if yes, the request will be sent to the exit DRC. When the exit DRC receives the request, it will check the resource condition of this pipe, when the resource is enough, the exit DRC will accept the request, update the resource table and send the receiving information to the entrance ER, and the entrance DRC will also update the resource table, return a receiving information to the QSC and record the corresponding state information.
5) When the QSC receives the receiving information from the entrance DRC, it will record the subscriber information, inform the charging system to prepare to work, and send a positive response to the source; otherwise, refuse the service source.
6) After the service source receives the accepting information, it will send the data to the DRC. When the entrance DRC receives the information, it will identify the subscriber according to the information of the service stream state, and map them to different QoS pipes for transmission.

The process of resource releasing is as follows:
1) When the QSC receives service terminating information from the service source, it will inform the entrance DRC to release the resource preliminary reserved, and update the table ofresource state.
2) Similarly, the entrance DRC will transmit resource-releasing information to the exit ER, and the exit DRC will release the corresponding resource and update the resource table.

This mechanism is similar to RSVP, but has several differences: the reservation of this scheme is only completed on the edge router, and the access control is not performed according to the resource condition of a single router, rather the resource control is performed according to the resource condition of the QoS pipes.

When there is condition of cross-field, since QoS pipes are pre-established in every field, a plurality of QoS pipes have to be passed through when crossing fields. In this scheme, the resource control is still implemented by the DRC in a manner of one field by another. The Qos signalings between and inside the fields are the same, all using a unified QoS signaling.

### 3) Interface

The invention does not relate to the format and the specification of the signaling protocol.

The QoS configuration in figure 2 has two signaling interface descriptions:
IF1: the interface between the service source and the QSC, being used for initiating and terminating a QoS service request, and transmitting subscriber's ID, starting point and terminal point etc., the SIP signaling etc. can be applied by this interface
IF2: the interface between a QSC and a DRC and the interface between DRCs, being mainly resource related QoS signaling, including resource request, feedback information, update information, and releasing information etc.
IF3: the interface between QSCs, which may be same as IF1.
IF4: the interface between a QPPC and a DRC and the interface between an QPPC and the QPPC of a neighboring field, which can be COPS, SNMP etc..
IF5: the interface between a QPPC and a QSC.

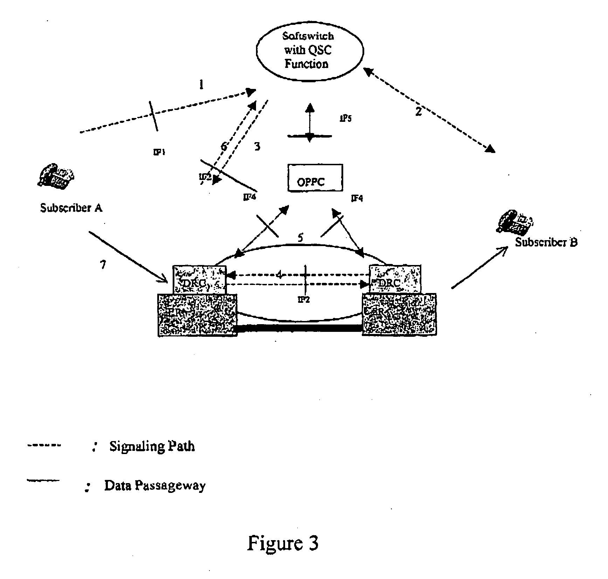

Next, an embodiment of applying this invention to VoIP will be described in detail in connection with figure 3.

Taking VoIP as an example, the QSC can be stored in the softswitch device, the DRC is in the ER device, and the QPPC is in the network management device.

The specific steps are as follows:
Provided that the QPPC function in the network management device has already been performed coarse distribution of resource, i.e. the establishment of QoS pipes is accomplished by LSP and MPLS flow engineering techniques.

The processing flow of service request is as follows:
1) The subscriber initiates a call request, including the information of subscriber's ID, starting point, terminal point and SLA etc..
2) The Softswitch processes the call request information, exchanges signaling with subscriber B, and determines the bandwidth and QoS parameters needed by the talk.
3) The Softswitch sends corresponding QoS resource request information to an entrance DRC. When the entrance DRC receives the resource request from the QSC, it will decide the exit DRC and the corresponding QoS pipe according to the information in the resource request, and check whether there is enough resource in the QoS pipe.
4) lf the entrance DRC has enough resource to access, the resource request will be transmitted to the exit DRC. When the exit DRC receives the request, it will check the resource condition of this pipe.
5) If the exit DRC has enough resource, it will accept the request, update the resource table, and send receiving information to the entrance DRC.
6) The entrance DRC will also update the resource table, return a receiving information to the QSC, and record corresponding state information. When the QSC receives the receiving information from the entrance DRC, it will record the information of the subscriber, and inform the charging system to prepare to work.
7) The subscriber begins to talk.
8) When the subscriber ends the talk, the QSC sends resource-releasing information to the DRC and releases the state originally stored in the edge router.

## Claims

1. A system for ensuring network QoS, the network comprising a QoS related service layer, a resource control layer and a bearer layer, the resource control layer comprising a coarse-grained resource control layer and a fine-grained resource control layer, the system comprising:
a QoS service controller QSC in the QoS related service layer, adapted to extract a QoS request of a service to a network from service requests, adapted to transmit the QoS request to a distributed resource controller DRC in the network, and adapted to transmit a resource-releasing information;
a QoS pipes provisioning controller QPPC, in the coarse-grained resource control layer, adapted to provision QoS pipes, adapted to obtain information about resource occupation of the QoS pipes periodically, and adapted to adjust the QoS pipes capacity dynamically but not by real-time; and
the distributed resource controller DRC, in the fine-grained resource control layer, adapted to process the QoS request from the QSC dynamically, and adapted to conduct access control and resource distribution for each resource request.

2. The system of claim 1, wherein said network comprises an edge router, and said provisioning of QoS pipes includes provisioning the edge router by the QPPC, which is adapted to initiate a dynamic setting of the QoS pipes by the edge router, or statically provisione the router in the network by the QPPC directly.

3. The system of claim 2, further adapted to form a resource information table by the edge router according to the QoS pipes information provisioned by the QPPC, capacity and exit of the QoS pipes being stored in said table.

4. The system of claim 2 or 3, wherein said resource distribution of the DRC is based on the QoS pipes that have been provisioned by the QPPC.

5. The system of claim 1, wherein the adjustment of the pipes capacity conducted by the QPPC includes increasing resources for the pipes lacking resource, and decreasing resource appropriately for the pipes with a low resource using rate.

6. The system of claim 2, wherein said network also comprises a softswitch application server and a network management device, said DRC may be arranged in the edge router, said QSC may be arranged in the softswitch application server, and said QPPC may be arranged in the network management device.

7. A method for distributing network resource, comprising performing the following steps within a system of any of claims 1∼6, in a layered way:
provisioning coarse-grained QoS pipes beforehand by a QoS pipes provisioning controller QPPC;
distributing resource in the QoS pipes fine-grainedly to corresponding streams according to a resource request of each stream from a QoS service controller QSC by a distributed resource controller DRC; and
dynamically adjusting the resource of the QoS pipes by the QPPC according to the occupation condition of the pipes fed back by the DRC.

8. A method for transmitting QoS data in a network, comprising performing the following steps within a system of any of claims 1∼6:
performing signaling interactions with a service receiving end of a QoS resource request by a QoS service controller QSC according to the request from a service source end;
transmitting the QoS resource request to the distributed resource controller DRC of the source by the QSC according to a confirming information from said service receiving end;
communicating between the distributed resource controller DRC of the source with the distributed resource controller DRC of the destination to decide whether the subscriber's request can be accessed;
transmitting a positive reply to the service source by the QSC according to the information of accessing the subscriber's request;
transmitting data to the distributed resource controller DRC of the source by the service source according to the reply; and
mapping said transmitted data by the distributed resource controller DRC of the source to different QoS pipes for transmission.

9. The method for transmitting QoS data of claim 8, further comprising the following steps of
informing an entrance DRC to release the resource reserved at the beginning and updating the resource state table by the QSC when it receiving a service-terminating information from the source; and
transmitting the resource-releasing information to an exit ER by the entrance DRC, and releasing corresponding resource and updating the resource table by the exit DRC.

## Patentansprüche

1. Ein System zum Sicherstellen der Netzwerk-QoS, wobei das Netzwerk eine QoSbezogene Dienstschicht, eine Betriebsmittelsteuerungsschicht und eine Trägerschicht beinhaltet, wobei die Betriebsmittelsteuerungsschicht eine grobgranulare Betriebsmittelsteuerungsschicht und eine feingranulare Betriebsmittelsteuerungsschicht beinhaltet, wobei das System Folgendes beinhaltet:
eine QoS-Dienststeuerung QSC in der QoS-bezogenen Dienstschicht, die angepasst ist, um eine QoS-Anforderung eines Dienstes an ein Netzwerk aus Dienstanforderungen zu extrahieren, angepasst ist, um die QoS-Anforderung an eine verteilte Betriebsmittelsteuerung DRC in dem Netzwerk zu übermitteln, und angepasst ist, um Informationen über die Betriebsmittelfreigabe zu übermitteln;
eine QoS-Leitungsbereitstellungssteuerung QPPC in der grobgranularen Betriebsmittelsteuerungsschicht, die angepasst ist, um QoS-Leitungen bereitzustellen, angepasst ist, um periodisch Informationen über eine Betriebsmittelbelegung der QoS-Leitungen zu erhalten, und angepasst ist, um die QoS-Leitungskapazität dynamisch, aber nicht in Echtzeit, anzugleichen; und
die verteilte Betriebsmittelsteuerung DRC in der feingranularen Betriebsmittelsteuerungsschicht, die angepasst ist, um die QoS-Anforderung von der QSC dynamisch zu verarbeiten, und angepasst ist, um eine Zugangssteuerung und eine Betriebsmittelverteilung für jede Betriebsmittelanforderung auszuführen.

2. System gemäß Anspruch 1, wobei das Netzwerk einen Edge-Router beinhaltet und das Bereitstellen von QoS-Leitungen das Bereitstellen des Edge-Routers durch die QPPC umfasst, die angepasst ist, um ein dynamisches Einstellen der QoS-Leitungen durch den Edge-Router zu initiieren, oder das direkte statische Bereitstellen des Routers in dem Netzwerk durch die QPPC umfasst.

3. System gemäß Anspruch 2, das ferner angepasst ist, um durch den Edge-Router gemäß den QoS-Leitungsinformationen, die durch die QPPC bereitgestellt werden, eine Betriebsmittelinformationstabelle zu bilden, wobei Kapazität und Ausgang der QoS-Leitungen in der Tabelle gespeichert werden.

4. System gemäß Anspruch 2 oder 3, wobei die Betriebsmittelverteilung der DRC auf den QoS-Leitungen basiert, die durch die QPPC bereitgestellt worden sind.

5. System gemäß Anspruch 1, wobei die Angleichung der Leitungskapazität, die durch die QPPC ausgeführt wird, das Erhöhen von Betriebsmitteln für die Leitungen, denen es an Betriebsmitteln fehlt, und das entsprechende Vermindern von Betriebsmitteln für die Leitungen mit einer niedrigen Betriebsmittelverwendungsrate umfasst.

6. System gemäß Anspruch 2, wobei das Netzwerk auch einen Softswitch-Anwendungsserver und eine Netzwerkverwaltungsvorrichtung beinhaltet, wobei die DRC in dem Edge-Router angeordnet sein kann, die QSC in dem Softswitch-Anwendungsserver angeordnet sein kann und die QPPC in der Netzwerkverwaltungsvorrichtung angeordnet sein kann.

7. Ein Verfahren zum Verteilen von Netzwerkbetriebsmitteln, das das Durchführen der folgenden Schritte innerhalb eines Systems gemäß einem der Ansprüche 1-6 in einer schichtartigen Weise beinhaltet:
Bereitstellen von grobgranularen QoS-Leitungen im Voraus durch eine QoS-Leitungsbereitstellungssteuerung QPPC;
feingranulares Verteilen von Betriebsmitteln in den QoS-Leitungen an entsprechende Ströme gemäß einer Betriebsmittelanforderung jedes Stroms von einer QoS-Dienststeuerung QSC durch eine verteilte Betriebsmittelsteuerung DRC; und
dynamisches Angleichen der Betriebsmittel der QoS-Leitungen durch die QPPC gemäß den Belegungsbedingungen der Leitungen, die durch die DRC zurückgeführt werden.

8. Ein Verfahren zum Übermitteln von QoS-Daten in einem Netzwerk, das das Durchführen der folgenden Schritte innerhalb eines Systems gemäß einem der Ansprüche 1-6 beinhaltet:
Durchführen von Signalinteraktionen mit einem Dienstempfangsende einer QoS-Betriebsmittelanforderung durch eine QoS-Dienststeuerung QSC gemäß der Anforderung von einem Dienstquellenende;
Übermitteln der QoS-Betriebsmittelanforderung an die verteilte Betriebsmittelsteuerung DRC der Quelle durch die QSC gemäß Bestätigungsinformationen von dem Dienstempfangsende;
Kommunizieren zwischen der verteilten Betriebsmittelsteuerung DRC der Quelle mit der verteilten Betriebsmittelsteuerung DRC des Ziels, um zu entscheiden, ob auf die Anforderung des Teilnehmers zugegriffen werden kann;
Übermitteln einer positiven Antwort an die Dienstquelle durch die QSC gemäß den Informationen des Zugreifens auf die Anforderung des Teilnehmers;
Übermitteln von Daten an die verteilte Betriebsmittelsteuerung DRC der Quelle durch die Dienstquelle gemäß der Antwort; und
Zuordnen der übermittelten Daten durch die verteilte Betriebsmittelsteuerung DRC der Quelle an verschiedene QoS-Leitungen zur Übermittlung.

9. Verfahren zum Übermitteln von QoS-Daten gemäß Anspruch 8, das ferner die folgenden Schritte beinhaltet:
Informieren einer Eingangs-DRC, um die zu Beginn reservierten Betriebsmittel freizugeben, und
Aktualisieren der Betriebsmittelzustandstabelle durch die QSC während ihres Empfangens von Dienstbeendungsinformationen von der Quelle; und
Übermitteln der Betriebsmittelfreigabeinformationen an einen Ausgangs-ER durch die Eingangs-DRC und Freigeben der entsprechenden Betriebsmittel und Aktualisieren der Betriebsmitteltabelle durch die Ausgangs-DRC.

## Revendications

1. Un système pour assurer la qualité de service QoS (QoS : Quality of Service) d'un réseau, le réseau comprenant une couche de service liée à la QoS, une couche de contrôle des ressources et une couche de transport, la couche de contrôle des ressources comprenant une couche de contrôle grossier des ressources et une couche de contrôle fin des ressources, le système comprenant :
un contrôleur de service de QoS, QSC, dans la couche de service liée à la QoS, pour extraire une demande de QoS d'un service à un réseau à partir de demandes de service, conçu pour transmettre la demande de QoS à un contrôleur de ressources distribuées DRC dans le réseau, et conçu pour transmettre une information de libération de ressources ;
un contrôleur de fourniture de canaux de transmission de QoS, QPPC, dans la couche de contrôle grossier des ressources, conçu pour fournir des canaux de transmission de QoS, conçu pour obtenir périodiquement des informations sur l'occupation des ressources des canaux de transmission de QoS, et conçu pour ajuster la capacité des canaux de transmission de QoS de façon dynamique, mais pas en temps réel ; et
le contrôleur de ressources distribuées DRC, dans la couche de contrôle fin des ressources, conçu pour traiter la demande de QoS provenant du QSC de façon dynamique, et conçu pour effectuer un contrôle d'accès et une distribution de ressources pour chaque demande de ressource.

2. Le système de la revendication 1, dans lequel ledit réseau comprend un routeur de bordure, et ladite fourniture de canaux de transmission de QoS inclut la fourniture du routeur de bordure par le QPPC, qui est conçu pour initier une configuration dynamique des canaux de transmission de QoS par le routeur de bordure, ou la fourniture statique du routeur dans le réseau directement par le QPPC.

3. Le système de la revendication 2, conçu en outre pour former une table d'informations de ressources par le routeur de bordure en fonction des informations de canaux de transmission de QoS fournies par le QPPC, la capacité et la sortie des canaux de transmission de QoS étant stockées dans ladite table.

4. Le système de la revendication 2 ou de la revendication 3, dans lequel ladite distribution de ressources du DRC est basée sur les canaux de transmission de QoS qui ont été fournis par le QPPC.

5. Le système de la revendication 1, dans lequel l'ajustement de la capacité des canaux de transmission effectué par le QPPC inclut l'augmentation des ressources pour les canaux de transmission manquant de ressources et la diminution des ressources de façon appropriée pour les canaux de transmission présentant un faible taux d'utilisation des ressources.

6. Le système de la revendication 2, dans lequel ledit réseau comprend également un serveur d'applications de commutateur logiciel et un dispositif de gestion du réseau, ledit DRC pouvant être disposé dans le routeur de bordure, ledit QSC pouvant être disposé dans le serveur d'applications de commutateur logiciel, et ledit QPPC pouvant être disposé dans le dispositif de gestion du réseau.

7. Un procédé de distribution de ressources réseau, comprenant la réalisation, par couches, des étapes suivantes dans un système de l'une quelconque des revendications 1 à 6 :
fourniture préalable de canaux de transmission de QoS grossiers par un contrôleur de fourniture de canaux de transmission de QoS, QPPC ;
distribution fine de ressources dans les canaux de transmission de QoS aux flux correspondants en fonction d'une demande de ressources de chaque flux d'un contrôleur de service de QoS, QSC, par un contrôleur de ressources distribuées DRC ;
et
ajustement dynamique de la ressource des canaux de transmission de QoS par le QPPC en fonction de l'état d'occupation des canaux de transmission alimentés en retour par le DRC.

8. Un procédé de transmission de données de QoS dans un réseau, comprenant la réalisation des étapes suivantes dans un système de l'une quelconque des revendications 1 à 6 :
réalisation d'interactions de signalisation avec l'extrémité réception de service d'une demande de ressources de QoS par un contrôleur de service de QoS, QSC, en fonction de la demande provenant d'une extrémité source de service ;
transmission de la demande de ressources de QoS au contrôleur de ressources distribuées DRC de la source par le QSC en fonction d'une information de confirmation provenant de ladite extrémité de réception de service ;
communication entre le contrôleur de ressources distribuées DRC de la source et le contrôleur de ressources distribuées DRC de la destination pour décider s'il est possible d'accéder à la demande de l'abonné ;
transmission d'une réponse positive à la source de service par le QSC en fonction de l'information relative à la décision d'accéder à la demande de l'abonné ;
transmission de données au contrôleur de ressources distribuées DRC de la source par la source de service en fonction de la réponse ; et
mise en correspondance des dites données transmises par le contrôleur de ressources distribuées DRC de la source avec différents canaux de transmission de QoS pour transmission.

9. Le procédé de transmission de données de QoS de la revendication 8, comprenant en outre les étapes suivantes :
notification à un DRC d'entrée de libérer la ressource réservée au début et
mise à jour de la table d'état des ressources par le QSC lors de la réception par celui-ci d'une information d'arrêt de service de la source ; et
transmission des informations de libération de ressource à un ER de sortie par le DRC d'entrée, et libération de la ressource correspondante et mise à jour de la table de ressources par le DRC de sortie.
